# EUROPEAN PATENT SPECIFICATION

(11) **EP 2 232 018 B1**
(45) Date of publication and mention of the grant of the patent: **02.11.2016**
(21) Application number: 09701263.7
(22) Date of filing: 09.01.2009
(51) Int. Cl.: F01K 13/02

(54) **Power plant with CO2 capture and compression**
Stromanlage mit CO2-Erfassung und -Kompression
Centrale électrique dotée de capture et de compression de CO2

(30) Priority: 11.01.2008 EP 08100390
(43) Date of publication of application: 29.09.2010
(73) Proprietor: General Electric Technology GmbH, 5400 Baden (CH)
(72) Inventor: BLATTER, Richard, CH-8200 Schaffhausen (CH); DRENIK, Olivier, F-90000 Belfort (FR); NAGEL, Holger, 70188 Stuttgart (DE)
(74) Representative: General Electric Technology GmbH
(86) International application number: PCT/EP2009/050205
(87) International publication number: WO 2009/087210

(56) References cited:
- WO-A-2008/090167
- DE-A1- 3 632 041
- US-A1- 2003 131 582
- US-B1- 6 196 000
- ACKENHEIL R ET AL: "PRIMARY FREQUENCY CONTROL FOR COMBINED CYCLE POWER PLANTS", VGB POWERTECH, VGB POWERTECH, ESSEN, DE, vol. 86, no. 3, 1 January 2006 (2006-01-01), pages 76-78, XP001241930, ISSN: 1435-3199

## Description

### FIELD OF THE INVENTION

The invention relates to power plants with CO2 capture and compression as well as their operation during frequency response.

### BACKGROUND OF THE INVENTION

In recent years it has become obvious that generation of greenhouse gases lead to global warming and that further increase in greenhouse gas production will further accelerate global warming. Since CO2 (carbon dioxide) is identified as a main greenhouse gas, CCS (carbon capture and storage) is considered one potential mayor means to reduce the release of greenhouse gases into the atmosphere and to control global warming. In this context CCS is defined as the process of CO2 capture, compression, transport and storage. Capture is defined as a process in which CO2 is removed either from the flue gases after combustion of a carbon based fuel or the removal and processing of carbon before combustion. Regeneration of any absorbents, adsorbents or other means to remove CO2 of carbon from a flue gas or fuel gas flow is considered to be part of the capture process. There are several possible approaches to CO2 capture in power plants, e.g. in coal fired steam power plants, gas turbine or combined cycle power plants. The main technologies under discussion for CO2 capture are so called pre-combustion capture, oxyfiring, chemical looping and post-combustion capture.

Pre-combustion carbon capture involves the removal of all or part of the carbon content of a fuel before burning it. For natural gas, this is typically done by reforming it with steam, followed by a shift reaction to produce CO2 and hydrogen. The CO2 can be captured and removed from the resulting gas mixture. The hydrogen can then be used to produce useful energy. The process is also known as synthesis gas or syngas approach. The same approach can be used for coal or any fossil fuel. First the fuel is gasified and then treated in the same way as natural gas. Applications of this approach in combination with IGCC (Integrated Gasification Combined Cycle) are foreseen.

Oxyfiring (also known as oxyfuel firing or oxygen combustion) is a technology that burns coal or other fossil fuel in a mixture of oxygen and recirculated CO2 rather than air. It produces a flue gas of concentrated CO2 and steam. From this, CO2 can be separated simply by condensing the water vapor, which is the second product of the combustion reaction.

Chemical looping involves the use of a metal oxide as an oxygen carrier, typically a metal oxide, which transfers oxygen from the combustion air to the fuel. Products from combustion are CO2, reduced metal oxide and steam. After condensation of the water vapor, the CO2 stream can be compressed for transportation and storage.

The CCS technology currently considered closest to large-scale industrial application is post combustion capture combined with compression, transportation and storage. In post-combustion capture the CO2 is removed from a flue gas. The remaining flue gas is released to the atmosphere and the CO2 is compressed for transportation and storage. There are several technologies known to remove CO2 from a flue gas such as absorption, adsorption, membrane separation, and cryogenic separation.

All known technologies for CO2 capture and compression require relatively large amounts of energy. There are many publications on the optimization of the different processes and the reduction of the power and efficiency penalty by integrating these processes into a power plant.

For CCS with post combustion capture, the CO2 capture and the compression of CO2 for further processing, i.e. transport and storage are the main resons for a decrease in the net power output reduction of a plant relative to a conventional plant without CCS.

The EP1688173 gives an example for a post combustion capture and a method for the reduction of power output penalties due to C02 absorption, respectively the regeneration of the absorption liquid. Here it is proposed to extract steam for regeneration of the absorbent from different stages of the steam turbine of a power plant to minimize the reduction in the turbine output.

In the same context, the WO2007/073201 suggests to use the compression heat, which results from compressing the CO2 stream for regeneration of the absorbent.

These methods aim to reduce the power requirements of specific CO2 capture equipments, however the use of the proposed CO2 capturing method will always result in a significant reduction of the plant capacity, i.e. the maximum power a plant can deliver to the grid.

A first attempt to mitigate the impact of CO2 capture on the plant performance by increasing plant flexibility is described in the EP0537593. The EP0537593 describes a power plant that utilizes an absorbent for CO2 capture from the flue gases, where the regenerator is switched off during times of high power demand and where the CO2 capture continues by use of absorbent stored in an absorbent tank during these times. The EP0537593 describes a simple on/ off mode of one power consumer of the CO2 capture equipment. It adds only very little operational flexibility at relatively high cost.

Frequency response is an important issue for power plant operation and also has to be considered for plants with CO2 capture and compression. The EP0858153 describes the basic principles of frequency response, in which a grid has a grid frequency, which fluctuates around a nominal frequency. The power output of said power plant is controlled as a function of a control frequency, in such a matter that the power output is increased when the control frequency decreases below said nominal frequency, and in the other hand the power output is decreased when the control frequency increases beyond said nominal frequency. The grid frequency is continuously measured. The EP0858153 describes a favorable method to average the grid frequency and to use the measured grid frequency as the control frequency, however it is limited to the conventional control mechanisms of a gas turbine power output control. To enable response to under- frequency events, plant normally have to operate at part load.

The US2003/0131582 discloses a coal syngas fired power plant. Syngas produced within a gasifier is combusted within a gas generator along with oxygen from an air separation plant. Carbon dioxide from the flue gases is compressed for capture without release into the atmosphere.

The US6196000 describes a power plant where fuel is burned at an elevated pressure level in semi-closed oxygen fired system. Combustion products are steam and carbon dioxide.

### SUMMARY OF THE INVENTION

The main objective of the present invention is to optimize the frequency response operating method for power plants with CO2 capture and compression. A further object of the invention is a power plant with a CO2 capture and compression system designed to operate according to the optimized operating method.

One objective is to take advantage of CCS (carbon capture and storage) in order to increase the flexibility of the plant and therefore increase its competitiveness to conventional plants without CO2 capture. According to the invention the power consumption of a CO2 capture system is used as a control parameter for the net power output of a power plant during an under- frequency event. In this context the electrical power consumption, mechanical power consumption as for example in direct CO2 compressor drives as well as consumption of live steam, which otherwise can be converted into electrical energy in a steam turbine, are considered as power consumption of the capture system. An under- frequency event, which is often also called under- frequency excursion or low frequency event, is a reduction in a power grid's frequency below the nominal frequency. In particular the frequency response capability of the plant is improved by using fast variations of CO2 capture and compression equipment power consumption to modify the electric power the plant can deliver to the power grid during an under-frequency event.

The essence of the invention is a plant operating method, in which the power consumption of the CO2 capture system is reduced or the system is shut down to increase the net output of the plant as a reaction to a drop in the grid frequency. In the context of this invention a CO2 capture system is defined as the entire CO2 capture unit plus the compression unit with all their auxiliaries. This operating method gives additional flexibility in addition to the existing control of the plant. Due to the integration of the CO2 system into the power plant with this method, the net output of the plant can be increased at a very high rate during an under-frequency event and no part load operation is required to assure net power capacity for frequency response. High rate power variations can be realized by fast gradients in the power consumption of the CO2 capture system. The plant can therefore operate with optimum efficiency at or close to base load. This invention is realized at no or very little additional cost.

In a conventional plant, the net output of the plant can be increased in response to an under- frequency event by increasing the gross power output of a plant and by decreasing the auxiliary or parasitic power consumption of the plant and any of its systems. The increase in gross power output is limited to base load of the plant. Further, the rate at which the gross power of a plant can be increased is limited due to thermal stresses, which occur during transients and inertia of the plant. In a conventional plant the possibilities to decrease parasitic power consumption of any system or auxiliaries are also very limited. Typically the biggest consumers for a steam or combined cycle power plant are the feed water pumps, cooling water pumps and cooling equipment, which cannot be switched off during continuous operation.

The large power consumption of CO2 capture and compression, which are not required for a safe continuous operation of the plant change the situation and give new possibilities for fast transient changes in net power without encountering limitations on the plant. In effect the power consumption of the CO2 capture system can be used as a control parameter for the plant's net power output. In particular the power consumption for CO2 capture and compression can be changed and this power can be used to meet the frequency response requirements of a power grid. Further, lifetime consuming fast load transients of the plant in response to under- frequency events can be avoided or reduced with this new concept as changes in net power output are met by a control of the power consumption of the CO2 capture system.

One additional advantage of frequency response with CO2 capture and compression is the possibility to avoid derated operation of the plant, which might be required by the grid if no more capacity for frequency reserve is available. Depending on the grid some plants might be required to operate at part load, for example 90% load in order to keep a power reserve for under- frequency events. Operation at 90% can lead to reduced efficiency and increases the capital and operational cost per MWh produced. Here, it is especially favorable that the present invention allows a plant to operate at or close to base load with optimum efficiency and still have an inherent power reserve for under- frequency events as the power consumption of the CO2 capture system can be switched off and used for frequency response.

In a first approach of using the CO2 capture system as a control parameter for the net power output, the CO2 capture and CO2 compression equipment or its main power consumers can simply be switched off during an under- frequency event. The CO2 separation, independent of chosen technology, is stopped and the plant is running like a conventional plant with CO2 emissions in the flue gases. Correspondingly, no CO2 compression with its parasitic power demand is required.

Besides simply stopping or even tripping the CO2 capture and compression unit, a deloading to reduced capacity or part load operation of the CO2 capture equipment and compression is proposed for frequency response operation. Reduced capacity can be realized by operating at least one of the CO2 capture system's components below the capacity required to reach the nominal CO2 capture rate. As a consequence the capture rate will be reduced during frequency response.

Since under- frequency events occur only very seldom and over a short period of time the accumulated amount of CO2 not captured due to this operation mode is typically small and can be neglected. Depending on the grid, under- frequency events, which would lead to such a short term CO2 emission occur only once in several years and will only last for a few minutes or a couple of dozen minutes.

However, flexible operation of the capture equipment and compression unit will increase the competitiveness of power plants with CO2 capture and compression. It will therefore allow earlier introduction of this kind of plants beyond mere pilot plant projects into a competitive power market and in consequence reduce the CO2 emissions.

In the following, a method for frequency support with CO2 capture and compression is discussed using the example of CO2 absorption. This method and all its variants described in the following are equally applicable for a CO2 capture method, which consists of CO2 adsorption, regeneration of the adsorbent and compression of captured CO2. Frequency response operation using the same principle is conceivable for all CO2 capture methods.

Operation of a CO2 capture and compression process, which consists of CO2 absorption, regeneration of the absorbent and compression of captured CO2 gives three main options to increase the flexibility of the plant operation. They can be performed one by one or all at the same time. They are:
1. Shut down or operation at reduced capacity of CO2 compression unit.
2. Shut down or operation at reduced capacity of regeneration unit
3. Shut down or operation at reduced capacity of absorption unit

While the first option already leads to a significant reduction in parasitic power consumption it will lead to a release of CO2 to the atmosphere within a very short time period as large volumes of uncompressed CO2 cannot be stored economically. Therefore part or all the captured CO2 can for example be released via a bypass of the CO2 compression unit during an under- frequency event. For a safe disposal of the captured CO2 it can for example be mixed with the flue gases downstream of the CO2 absorption unit and released via the stack of the power plant.

A further significant reduction in parasitic power consumption can be realized by the second option. Regeneration typically is done by "re- boiling" of the absorbent, which means heating the absorbent by steam in order to release the CO2. In consequence the steam is no longer available for power production. Once the regeneration is stopped during frequency response operation, the steam is available for power production.

A third option, in which also the absorption process is stopped or operated at reduced capacity, leads to further reduction in auxiliary power consumption. This reduction in power consumption is significantly smaller than the savings achieved in the first two options. Depending on the design of the absorption unit a part of or all the flue gas is bypassed around the capture equipment during this operation mode.

Operation of the absorption process itself does not make any sense without further measures, as the absorbent in conventional arrangements will be saturated quickly and cannot capture any more CO2. However, depending on the size of absorbent storage tanks CO2 capture without regeneration and CO2 compression is possible for a limited period of time.

As a trip of the CO2 capture and compression method is often much faster and safer than a deloading of the systems, a combination of a trip of at least one part of the system with the plant load control is proposed. If at least one part of the system is tripped, the resulting net power output increase can be higher than required for the frequency response. In this case the gross power output of the plant can be reduced using conventional plant control to assure the correct net power output required by the grid.

Besides shut down of CO2 capture system's components, their part load operation is possible. For example the mass flow of the CO2 compression unit can be reduced by control means such as inlet guide vanes. In case of a compression unit consisting two or more parallel compressor trains, the shut down of at least one compressor would obviously also lead to a reduction of the CO2 compression unit's power consumption. In case of two parallel compressor trains operating at full capacity, shut down of one compressor train would lead to a reduction in power consumption by 50% but also implicate that 50% of the captured CO2 cannot be compressed and would typically be bypassed to the stack. Alternatively the resorption rate can be reduced. This can for example be realized by reducing the flow of absorbent through the regeneration unit and bypassing the remaining flow and mixing the two flows before they enter the absorbtion unit. As only part of the flow passes through the regeneration unit, the steam required for regeneration is reduced and the surplus steam can be used for power production. As a consequence of mixing regenerated with unregenerated absorbent, the capacity of the resulting mixture to absorb CO2 is reduced and a lower percentage of CO2 is captured from the flue gases and less CO2 is released for compression in the regeneration unit. As it is not very economical to first capture CO2 and then bypass it, a simultaneous reduction in the capacity of all capture systems components is proposed.

Another possibility to operate the absorption unit without regeneration or regeneration at reduced capacity of absorbent during an under- frequency event is to use stored absorbent for CO2 during this time.

If a critical grid situation occours a signal from the dispatch center could already start the above described reduction in power consumption of the CO2 capture system before the frequency drops under a critical threshold and therefore help to stabilize the grid.

Different control methods for operation of the CO2 capture system are possible. One example is an open loop control of the different components of the CO2 capture system. This is particularly suitable in the case that only on/ off control of the different components is used.

Open loop control is also conceivable for a more sophisticated operating process in which a continuous control of the power consumption of the CO2 capture system, i.e. without sudden steps in the power output due to on / off switching of different components, is realized. In this example continuous control of the power consumption of the CO2 capture system is realized by the variation of one component's power consumption at a time, while the remaining components operate at constant load. However, closed loop control can be advantageous for example for transient operation or operation under changing boundary conditions.

In case that operation at reduced capacity of the different components is foreseen, a closed loop control will allow better optimization of the load distribution. This is especially advantageous if a control of the CO2 capture rate is implemented. In this case the power consumption of the CO2 capture system is not varied by the control of one single component at a time, while the remaining components operate at constant load. The reduction in capacity of the different components has to be coordinated. For this a feed back of the current operating conditions of each component is advantageous and a closed loop control is preferable.

A further subject of this invention is a thermal power plant for the combustion of carbon-based fuels with a CO2 capture system, which is designed for operation according to the frequency response method described above. The corresponding CO2 capture system is enabling fast system deloading.

One embodiment of the invention is a power plant burning a carbon-based fuel, which has at least one flue gas stream. A plant in accordance with the present invention typically includes, in addition to the conventional components known for power generation, a CO2 capture unit for removing CO2 from the flue gas stream, and a CO2 compression unit. The capture unit typically includes capture equipment, in which the CO2 is removed from the flue gas, a regeneration unit, in which the CO2 is released from the absorbent, adsorbent or other means to bind the CO2 from the flue gas, and a treatment system for conditioning the CO2 for transportation. The compression unit consists of at least one compressor for CO2 compression. Typically the compression unit also consists of at least one cooler or heat exchanger for re- cooling compressed CO2 during and/or after the compression.

To allow operation according to the proposed operating concept a steam turbine of the plant is designed to convert the maximum steam flow into energy, which can be produced by the plant with the CO2 capture system switched off.

In a further embodiment, the generator and electrical systems are designed to convert the maximum power, which is produced with the CO2 capture system off, into electrical power and to transmit this electric power to the grid.

In order to facilitate the above described operation of such a plant it can further comprise a bypass of the CO2 compressor, which can safely vent the CO2, and for example leads into the flue gas stack downstream of the CO2 capture device.

In a further embodiment, the CO2 capture unit is designed to withstand the flue gases even when it is not in operation, for example an absorption unit, which is designed to run dry.

Alternatively a bypass of the CO2 capture unit can be foreseen, which allows to operate the power plant independent of the CO2 capture unit. This bypass can also be advantageous for start-up or shut down of the plant as well as for plant operation during maintenance of the CO2 capture system.

In a further embodiment, a storage tank dimensioned to supply CO2 absorbent for a defined period of time is provided, which allows continuous CO2 capture even when the CO2 compression and resorption are off during an under- frequency event.

As CO2 capture system is a complex system, an appropriate control system is required as discussed for the different operating methods above. This control system is depending on and affecting the power control of the plant. As the power control is an essential part of the plant control system it is advantageous to integrate the control of the CO2 capture system into plant control system or to coordinate the control of the CO2 capture system by the plant control system and to connect all the relevant data lines to the plant control system. If the plant consists of several units and the plant control system has a hierarchical structure consisting of plant controller and unit master controllers, it is advantageous to realize such an integration or coordination of the CO2 capture system's control into each units' master controller.

Alternatively the CO2 capture system has its own controller, which is connected to the plant control system via a direct data link. The plant control system or the unit master controller has to send at least one signal to the controller of the CO2 capture plant. This signal can for example be a commanded power consumption signal or a commanded capture rate.

In the above-described cases the CO2 capture controller is not necessarily one hardware device but can be decentralized into drive and group controllers coordinated by one or more control units.

In case the control of the CO2 capture system is coordinated by the plant control system, the high-level control unit can for example send the total commanded mass flow to the CO2 compression unit's group controller and receive the total actual mass flow as input from this group controller. The compression unit in this example contains several compressor trains. Each of the compressor trains has its own device controller. The group controller has an algorithm to decide how to best distribute the commanded total CO2 compression mass flow on the different compressor trains and sends a commanded mass flow to each individual compressor train's device controller. In return, the group controller gets the actual CO2 compression mass flow of each compressor train. Each compressor train device controller can again work with depended controllers on lower levels.

The same kind of hierarchy can be applied to the control of all components of the CO2 capture system.

### BRIEF DESCRIPTION OF THE DRAWINGS

The invention, its nature as well as its advantages, shall be described in more detail below with the aid of the accompanying drawings. Referring to the drawings.
Fig. 1 is a schematic view of a power plant with CO2 capture and compression.
Fig. 2 schematically shows power output variations for a power plant with a flexible operation method for CO2 capture and compression during an under-frequency response event.
Fig. 3 schematically shows power output variations for a power plant with a flexible operation method for CO2 capture and compression during an under-frequency response event, combined with a correction of the plant gross output.
Fig. 4 schematically shows power output variations for a power plant with a flexible operation with for CO2 capture and compression during an under-frequency response event, in which the additional net power requirements of the grid are met by trips of the CO2 capture and compression systems.

### DETAILED DESCRIPTION OF THE DRAWINGS AND THE INVENTION

A power plant for execution of the proposed method consists mainly of a conventional power plant 1 plus a CO2 capture unit 2 and a CO2 compression unit 9.

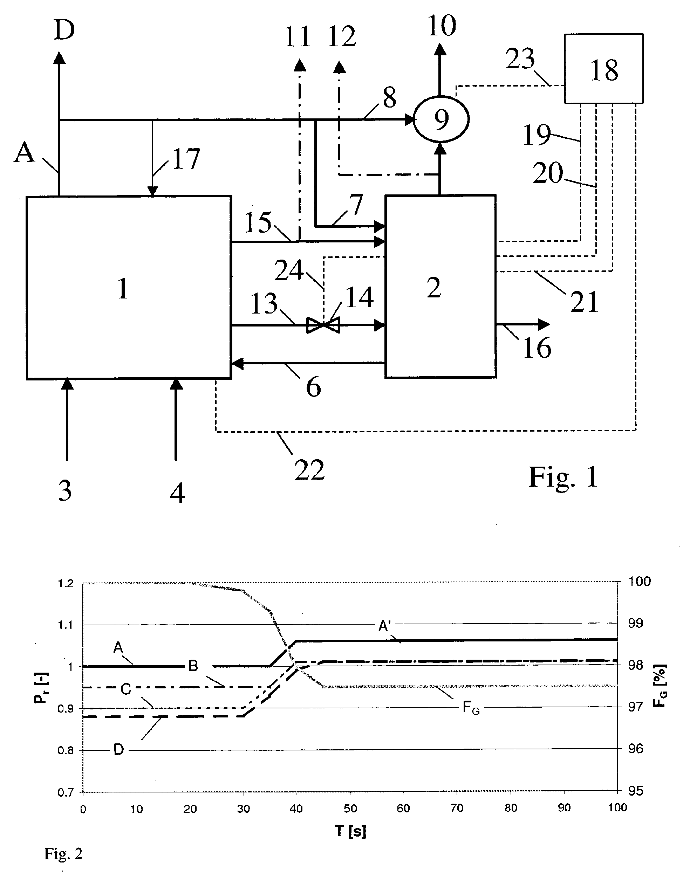

A typical arrangement with post combustion capture is shown in Fig. 1. The power plant 1 is supplied with air 3 and fuel 4. Its main outputs are the plant gross electric power A and flue gas 15. Further, steam is extracted from the plant 1 and supplied via the steam line 13 and the steam control valve 14 to the CO2 capture unit 2. The steam is returned to the plant 1 at reduced temperature or as condensate via the return line 6 where it is reintroduced into the steam cycle. A CO2 capture unit 2 typically consists of a CO2 absorption unit, in which CO2 is removed from the flue gas by an absorbent, and a regeneration unit, in which the CO2 is released from the absorbent. Depending on the temperature of the flue gas and the operating temperature range of the CO2 absorption unit, a flue gas cooler might also be required.

The CO2 depleted flue gas 16 is released from the CO2 capture unit to a stack. In case the CO2 capture unit 2 is not operating, it can be bypassed via the flue gas bypass 11.

In normal operation the captured CO2 will be compressed in the CO2 compressor 9, and the compressed CO2 10 will be forwarded for storage or further treatment.

Electric power 7 is required to drive auxiliaries of the CO2 capture unit 2, and electric power 8 is used to drive the CO2 compression unit 9. The net power output D to the grid is therefore the gross plant output A reduced by the electric power for plant auxiliaries 17, reduced by the electric power for CO2 compression unit 8, and by the electric power for the CO2 capture unit 7.

The corresponding control unit 18, which integrates the control of the additional components needed for the CO2 capture and compression with the control of the power plant is also depicted in Fig. 1. The control unit 18 has the required at least one control signal line 22 with the power plant 1, and at least one control signal line with the CO2 compression unit 9. Further, the at least one control signal line 19 with the CO2 capture unit 2 including the flue gas bypass 11 is indicated. In case the capture unit 2 is based on absorption or adsorption, a regeneration unit is part of the system and correspondingly at least one signal line 20 to the regeneration unit is required. If the capture unit 2 also includes at least one storage tank for an adsorbent/ absorbent control signal lines 21 to the storage system is required. For the example shown, in which steam 13 is used for regeneration, the steam control valve 24 is controlled via the control signal lines 24. This control line is connected to the resorption unit, which is part of the capture unit 2, or directly to the control system 18.

The control of net power D is explained using two examples, in which an increase in net power output D is required for frequency response starting from an operating point where all components operate at full capacity:
In a simple approach the net output D is first increased by a controlled reduction in the power consumption of the CO2 compressor unit 9. As the power consumption of the compressor unit 9 is reduced, the amount of CO2 released from the CO2 regeneration unit 2 stays constant. As a consequence part of the CO2 flow has to bypass the CO2 compressor unit through the CO2 compression unit bypass 12. Once the CO2 compressor unit 9 is completely switched off, the net output D is increased by a controlled reduction in the power consumption of the CO2 regeneration unit. Finally, when the CO2 regeneration unit is completely switched off, the net output D is increased by a controlled reduction in the power consumption of the CO2 absorption unit and, if applicable, of a flue gas cooler. In case the CO2 absorption unit 2 is not designed to run dry, i.e. it cannot be exposed to the flue gases 15 without the flow of absorbent and/ or additional flue gas cooling, the flue gas bypass 11 for the CO2 capture unit 2 has to be opened as a function of the power available for the absorption unit.

In a more sophisticate approach the net output D is increased by a controlled and coordinated reduction in the power consumption of all components of the CO2 capture unit 2 and compression unit 9. The target is to maximize the CO2 capture rate at reduced power consumption. To this end the capacity of all components is reduced simultaneously at the same rate, and the CO2 flow through all components is the same. In consequence the power consumption is varied as a function of the capture rate. To assure that the flow rates of different components match, a feedback form these components is required and a closed loop control is advantageous. At very low capture rate, and if the CO2 absorption unit 2 is not designed to run dry, e.g. it cannot be exposed to the flue gases without the flow of absorbent and/ or additional flue gas cooling, the flue gas bypass for the CO2 capture unit 11 has to be opened as a function of the power available for the absorption unit 2.

The impact of the main power consumers of the CO2 capture system on the plant power output is shown in Fig. 2 to 4. The impact of the auxiliary power consumption of the plant itself is also indicated in these Figures.

In Fig. 2 an example for an under- frequency event with the optimized operation method of a power plant with CO2 capture and compression is shown over time. At time T = 0s the plant is in normal operation at base load with the CO2 capture and compression system in operation. The impact of the plant auxiliaries and main power consumers of the CO2 capture system on the plant net power output D is show by indicating the relative output Pᵣ at different stages of the plant. All power outputs shown in this Figure are normalized by plant gross power output A at base load with steam extraction for resorption. A' is the gross output without steam extraction for resorption. B is the gross output reduced by the plant auxiliaries. C is the output after the output B is further reduced by CO2 compression. D is the resulting plant net power output after C is reduced by the power consumption of the absorption. The normalized grid frequency F_{G} is the frequency normalized with the nominal grid frequency, which is typically either 50 Hz or 60 Hz.

According to the proposed operating method the power reductions from B to C, and C to D as well as the gross power increase from A to A' are used to control the net output D during an under- frequency event. In this example, the net power D is kept constant as the normalized grid frequency F_{G} drops from 100% to 99.8% during the time period from 20s to 30s because the controller has a 0.2% dead band, in which it does not react to deviations from design frequency. As the frequency continues to drop to 99.3% at time T = 35s, frequency response becomes active and the net power output D is increased by a controlled shut down of the CO2 compression between time T = 30s and T = 35s. As the normalized grid frequency F_{G} continues to drop to 98% between T = 35s and T = 40s the CO2 regeneration is also shut down and no more steam is extracted for resorption. Consequently, the gross power increases from A to A' and the net power output D increases accordingly. In a final step to increase the net power output D, the CO2 absorption is shut down between times T = 40s and T = 45s and the frequency F_{G} is stabilized at 97.5%.

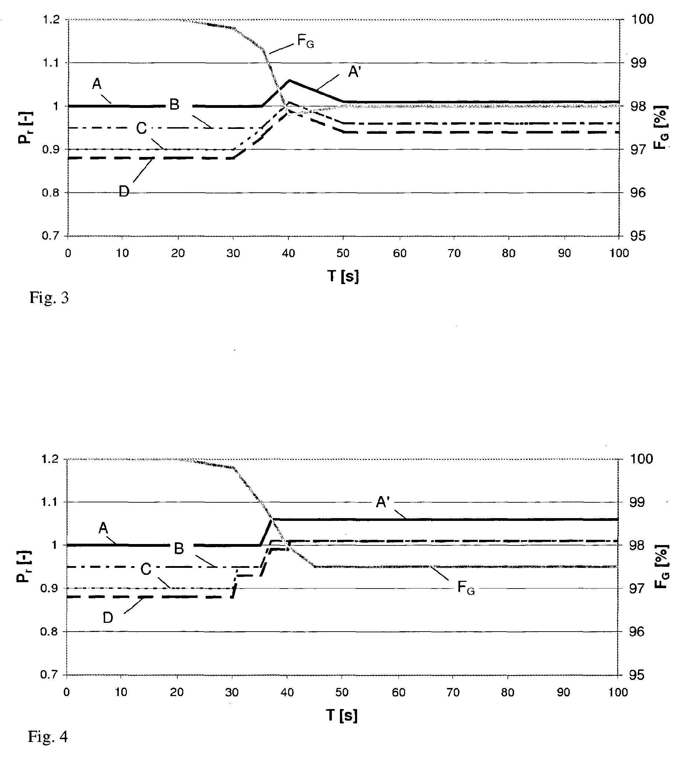

In Fig. 3 a second under- frequency event with the optimized operation method of a power plant with CO2 capture and compression is shown over time. At time T = 0s the plant is in normal operation at base load with the CO2 capture and compression system in operation.

In this example, the normalized grid frequency F_{G} drops from 100% to 99.8% during the time period from T = 20s to T = 30s. Due to a 0.2% dead band, no control action takes place until T = 30s. As the frequency continues to drop to 99.3% between time T = 30s and T = 35s, the net power output D is increased by a controlled shut down of the CO2 compression as frequency response. Since the normalized grid frequency F_{G} continues to drop to 97.8% between T = 35s and T = 40s the CO2 regeneration is also shut down and no more steam is extracted for resorption. Consequently, the gross power increases from A to A' and the net power output D increases accordingly. Between time T = 40s and T = 45s the normalized grid frequency F_{G} recovers to 98% and the net power D is reduced by a reduction of gross power A', to meet the grid net power requirements corresponding to the under- frequency. At the same time the normalized grid frequency F_{G} stabilizes at 98%.

Fig. 4 shows a third example for power output variations of a power plant with a flexible operation method for CO2 capture and compression during an under-frequency response event. In this example, the additional net power requirements of the grid are met by sudden shut downs or trips of the CO2 capture and compression system's components.

Again, at time T = 0s the plant is in normal operation at base load with the CO2 capture and compression system in operation. The impact of the plant auxiliaries and main power consumers of the CO2 capture system on the net plant power output D is show by indicating the relative output Pᵣ at different stages of the plant. All power outputs shown in this Figure are normalized by plant gross power output A at base load with steam extraction for resorption. A' is the gross output without steam extraction for resorption. B is the gross output reduced by the plant auxiliaries. C is the output after the output B is further reduced by CO2 compression. D is the resulting plant net power output after D is reduced by the power consumption of the absorption.

As in the earlier examples a 0.2% dead band is assumed and the net power D is kept constant as the normalized grid frequency F_{G} drops from 100% to 99.8% during the time period from T = 20s to T = 30s. Once the frequency deviation exceeds 0.2%, frequency response becomes active and the net power D is increased by a sudden shut down or trip of the CO2 compression at time T = 30s. No further control action takes place while the frequency F_{G} continues to drop to 99% at time T = 35s. As the normalized grid frequency F_{G} continues to drop below 99%, the CO2 regeneration is also tripped and no more steam is extracted for resorption. Consequently, the gross power increases from A to A' and the net power output D increases accordingly. No further control action takes place while the frequency F_{G} continues to drop to 98% between T = 35s and T = 40s. In a final step to increase the net power output E, the CO2 absorption is tripped once the net frequency drops below 98% at T = 40s. The net frequency F_{G} further drops to 97.5% where it stabilizes.

Exemplary embodiments described above and in the drawings disclose to a person skilled in the art embodiments, which differ from the exemplary embodiments and which are contained in the scope of the invention.

For example, the power used for recompression of flue gasses, as used in case of cryogenic CO2 separation or in case of absorption on elevated pressure levels can be saved or reduced during times of high power demand. Or, in case of CO2 separation with chilled ammonia, the cooling power can be saved or reduced during an under- frequency event. Further, the method and a corresponding plant without CO2 compression is conceivable.

In the examples given here, no time delay between drop of grid frequency and control action is indicated. Depending on the speed of measurements, signal transmission and controller, there can be a noticeable time delay, which can be in the order of seconds.

Further, in a gas turbine based power plant or combined power plant any under-frequency event will lead to a reduction of the gas turbine gross power output, if no countermeasures are taken. Typically an over firing, that is an increase of the hot gas temperature beyond the design temperatures, is carried out for frequency response in gas turbines. The standard measures for frequency response can be combined with the features described for power plants with CO2 capture and compression.

### List of reference symbols

- 1: Power Plant
- 2: CO2 capture unit
- 3: Air
- 4: Fuel

- 6: return line
- 7: Electric power for CO2 capture unit
- 8: Electric power for CO2 compression unit
- 9: CO2 compression
- 10: Compressed CO2
- 11: Flue gas bypass for CO2 capture unit
- 12: CO2 compression unit bypass
- 13: Steam to CO2 capture unit
- 14: Steam control valve
- 15: Flue gas to CO2 capture unit
- 16: CO2 depleted flue gas
- 17: Electric power for plant auxiliary excluding CO2 capture and compression
- 18: Control system
- 19: Control signal exchange with CO2 capture unit and flue gas bypass
- 20: Control signal exchange with regeneration unit (if applicable)
- 21: Control signal exchange with absorbent/ adsorbent storage system (if applicable)
- 22: Plant control signals exchange as for conventional plant without CO2 capture including gross and net power
- 23: Control signal exchange with CO2 compression unit and compressor bypass
- 24: Control signal exchange to steam control valve - directly from control system or via the regeneration unit (if applicable)
- A: Plant gross power output with steam extraction for CO2 resorption
- A': Plant gross power output without steam extraction for CO2 resorption
- B: A reduced by plant auxiliaries without CO2 capture and compression
- C: B reduced by power requirements for CO2 compression - varied depending on grid power demand.
- D: CO2 capture plant net power output (C reduced by power requirements for absorption - varied depending on grid power demand).
- F_{G}: normalized Grid frequency

## Claims

1. A method for operating a power plant (1) with a control system (18) and CO2 capture system comprising a CO₂ capture unit (2) and a CO₂ compression unit (9), **characterized in that** the power consumption of the CO2 capture system is used as a control parameter for the net power output (D) during an under- frequency event.

2. A method according to claim 1, **characterized in that** the CO2 capture system is operated at reduced capacity or is shut down in order to supply additional power to the grid, and that this additional power is used to meet frequency response requirements of a power grid during an under-frequency event.

3. A method according to claim 1 or 2, **characterized in that** the power plant (1) is operated close to or at base load when the CO2 capture system is in operation and the power consumption of the CO2 capture system is available for frequency response of the plant.

4. A method according to one of the claims 1 to 3, **characterized in that** the CO2 capture rate is varied to control the power consumption of the CO2 capture system during an under- frequency event.

5. A method according to one of the claims 1 to 4, **characterized in that** the CO2 compression unit (9) is shut down or operated at reduced capacity during an under- frequency event.

6. A method according to one of the claims 1 to 5, **characterized in that** the CO2 compression unit (9) is shut down or operated at reduced capacity and that part or all of the captured CO2 is released via a bypass (12) of the CO2 compression unit during an under- frequency event.

7. A method according to one of the claims 1 to 6 **characterized in that** a regeneration unit is comprised in the CO₂ capture unit (2) and that said regeneration unit is shut down or operated at reduced capacity during an under- frequency event.

8. A method according to one of the claims 1 to 7, **characterized in that** an absorption or adsorption unit is comprised in the CO₂ capture unit (2) and that said absorption or adsorption unit is shut down or operated at reduced capacity during an under- frequency event.

9. A method according to claim 8, **characterized in that** part of or all the flue gas is bypassed around the capture equipment during an under- frequency event.

10. A method according to claim 7, **characterized in that** the steam (13) consumption of the regeneration unit comprised in the CO₂ capture unit (2) is reduced due to the shut down or operation at reduced capacity, and that the surplus steam is fed to an existing steam turbine of the plant (1) for additional power generation during an under- frequency event.

11. A method according to claim 10, **characterized in that** regeneration is shut down or regeneration of absorbent or adsorbent place at reduced capacity during an under- frequency event, and that stored absorbent or adsorbent is used for CO2 capture during an under- frequency event.

12. A method according to one of the preceding claims, **characterized in that** the CO2 capture system is controlled by a closed loop control system (18), which is integrated into the plant control system or coordinated by the plant control system or has a direct data link (22) to the plant control system.

13. A power plant (1) with a C02 capture system comprising a CO₂ capture unit (2) and a CO₂ compression unit (9), **characterized in that** the plant (1) comprises a control system, which uses the power consumption of the CO2 capture system as a control parameter for controlling the net power output (D) during an under- frequency event.

14. A power plant according to claim 13, **characterized in that** at least one generator and electrical systems are designed to convert the maximum power, which is produced with the CO2 capture system off, into electrical power and to transmit this electric power to the grid.

15. A power plant (1) according to claims claim 13 or 14, **characterized in that** an absorption unit is comprised in the CO₂ capture unit (2) and that a bypass (12, 11) of the CO2 compression unit (9) and/ or the absorption unit is provided.

16. A power plant (1) according to one of the claims claim 13 to 15, **characterized in that** an absorption unit is comprised in the CO₂ capture unit (2) and that the absorption unit is designed to withstand the flue gases (15) even when it is not in operation.

## Patentansprüche

1. Verfahren zum Betreiben einer Stromanlage (1) mit einem Steuersystem (18) und einem CO2-Erfassungssystem, umfassend eine CO2-Erfassungseinheit (2) und eine CO2-Kompressionseinheit (9), **dadurch gekennzeichnet, dass** der Stromverbrauch des CO2-Erfassungssystems als ein Steuerparameter für den Nettostromausgang (D) während eines Unterfrequenzereignisses verwendet wird.

2. Verfahren nach Anspruch 1, **dadurch gekennzeichnet, dass** das CO2-Erfassungssystem bei reduzierter Kapazität betrieben wird oder abgeschaltet wird, um dem Netz zusätzlichen Strom zuzuführen, und dadurch, dass dieser zusätzliche Strom zum Erfüllen der Anforderung an die Frequenzreaktion eines Stromnetzes während eines Unterfrequenzereignisses verwendet wird.

3. Verfahren nach Anspruch 1 oder 2, **dadurch gekennzeichnet, dass** die Stromanlage (1) nahe oder bei Grundlast betrieben wird, wenn das CO2-Erfassungssystem in Betrieb ist und der Stromverbrauch des CO2-Erfassungssystems für die Frequenzreaktion der Anlage verfügbar ist.

4. Verfahren nach einem der Ansprüche 1 bis 3, **dadurch gekennzeichnet, dass** die CO2-Erfassungsrate variiert wird, um den Stromverbrauch des CO2-Erfassungsystems während eines Unterfrequenzereignisses zu steuern.

5. Verfahren nach einem der Ansprüche 1 bis 4, **dadurch gekennzeichnet, dass** die CO2-Kompressionseinheit (9) während eines Unterfrequenzereignisses abgeschaltet oder bei reduzierter Kapazität betrieben wird.

6. Verfahren nach einem der Ansprüche 1 bis 5, **dadurch gekennzeichnet, dass** die CO2-Kompressionseinheit (9) während eines Unterfrequenzereignisses abgeschaltet wird oder bei reduzierter Kapazität betrieben wird und dass ein Teil oder das gesamte erfasste CO2 während eines Unterfrequenzereignisses über eine Umgehung (12) der CO2-Kompressionseinheit freigesetzt wird.

7. Verfahren nach einem der Ansprüche 1 bis 6, **dadurch gekennzeichnet, dass** eine Regenerierungseinheit in der CO2-Erfassungseinheit (2) enthalten ist und dass die Regenerierungseinheit während eines Unterfrequenzereignisses abgeschaltet wird oder bei reduzierter Kapazität betrieben wird.

8. Verfahren nach einem der Ansprüche 1 bis 7, **dadurch gekennzeichnet, dass** eine Adsorptionseinheit in der CO2-Erfassungseinheit (2) enthalten ist und dass die Adsoprtion oder die Adsorptionseinheit während eines Unterfrequenzereignisses abgeschaltet wird oder bei reduzierter Kapazität betrieben wird.

9. Verfahren nach Anspruch 8, **dadurch gekennzeichnet, dass** ein Teil oder das gesamte Rauchgas während eines Unterfrequenzereignisses das Erfassungsgerät umgeht.

10. Verfahren nach Anspruch 7, **dadurch gekennzeichnet, dass** der Dampfverbrauch (13) der Regenerierungseinheit, die in dem CO2-Erfassungssystem (2) enthalten ist, aufgrund des Abschaltens oder des Betriebs bei reduzierter Kapazität reduziert wird, und dadurch, dass der übermäßige Dampf einer bestehenden Dampfturbine während eines Unterfrequenzereignisses für die zusätzliche Stromerzeugung in die Anlage (1) eingeleitet wird.

11. Verfahren nach Anspruch 10, **dadurch gekennzeichnet, dass** die Regenerierung während eines Unterfrequenzereignisses abgeschaltet wird oder die Regenerierung der Absorptions- oder Adsorptionsstelle bei reduzierter Kapazität betrieben wird und dass das gespeicherte Absorbens oder Adsorbens während eines Unterfrequenzereignisses zur CO2-Erfassung verwendet wird.

12. Verfahren nach einem der vorhergehenden Ansprüche, **dadurch gekennzeichnet, dass** das CO2-Erfassungssystem von einem geschlossenen Steuerungssystem (18) gesteuert wird, das in dem Anlagensteuerungssystem integriert ist oder vom Anlagensteuerungssystem koordiniert wird, oder eine direkte Datenverknüpfung (22) mit dem Anlagensteuerungssystem aufweist.

13. Stromanlage (1) mit einem CO2-Erfassungssystem, umfassend eine CO2-Erfassungseinheit (2) und eine CO2-Kompressionseinheit (9), **dadurch gekennzeichnet, dass** die Anlage (1) ein Steuerungssystem umfasst, das den Stromverbrauch des CO2-Erfassungssystems als einen Steuerparameter zum Steuern des Nettostromausgangs (D) während eines Unterfrequenzereignisses verwendet.

14. Stromanlage nach Anspruch 13, **dadurch gekennzeichnet, dass** mindestens ein Generator und elektrische Systeme zum Wandeln des maximalen Stroms, der bei ausgeschaltetem CO2-Erfassungssystem erzeugt wird, zu Strom und zum Übertragen dieses Stroms in das Stromnetz ausgestaltet sind.

15. Stromanlage (1) nach einem der Ansprüche Anspruch 13 oder 14, **dadurch gekennzeichnet, dass** eine Absorptionseinheit in der CO2-Erfassungseinheit (2) enthalten ist und dadurch, dass eine Umgehung (12, 11) der CO2-Kompressionseinheit (9) und/oder der Absorptionseinheit bereitgestellt wird.

16. Stromanlage (1) nach einem der Ansprüche 13 bis 15, **dadurch gekennzeichnet, dass** eine Absorptionseinheit in der CO2-Erfassungseinheit (2) enthalten ist und dadurch, dass die Absorptionseinheit zum Widerstehen von Rauchgasen (15) ausgestaltet ist, sogar dann, wenn sie nicht in Betrieb ist.

## Revendications

1. Procédé de fonctionnement d'une centrale électrique (1) avec un système de commande (18) et un système de capture de CO₂ comprenant une unité de capture de CO₂ (2) et une unité de compression de CO₂ (9), **caractérisé en ce que** la consommation électrique du système de capture de CO₂ est utilisée comme paramètre de commande pour la production électrique nette (D) lors d'un événement de fréquence insuffisante.

2. Procédé selon la revendication 1, **caractérisé en ce que** le système de capture de CO₂ fonctionne à capacité réduite ou est arrêté afin de fournir de l'électricité supplémentaire au réseau, et **en ce que** cette électricité supplémentaire est utilisée pour respecter les exigences de réponse en fréquence d'un réseau électrique lors d'un événement de fréquence insuffisante.

3. Procédé selon la revendication 1 ou 2, **caractérisé en ce que** la centrale électrique (1) fonctionne près de ou à la charge de base quand le système de capture de CO₂ est en fonctionnement et la consommation électrique du système de capture de CO₂ est disponible pour la réponse en fréquence de la centrale.

4. Procédé selon une des revendications 1 à 3, **caractérisé en ce que** le taux de capture de CO₂ est modifié pour contrôler la consommation électrique du système de capture de CO₂ lors d'un événement de fréquence insuffisante.

5. Procédé selon une des revendications 1 à 4, **caractérisé en ce que** l'unité de compression de CO₂ (9) est arrêtée ou fonctionne à capacité réduite lors d'un événement de fréquence insuffisante.

6. Procédé selon une des revendications 1 à 5, **caractérisé en ce que** l'unité de compression de CO₂ (9) est arrêtée ou fonctionne à capacité réduite et **en ce que** tout ou partie du CO₂ capturé est libéré par une dérivation (12) de l'unité de compression de CO₂ lors d'un événement de fréquence insuffisante.

7. Procédé selon une des revendications 1 à 6, **caractérisé en ce qu'**une unité de régénération est contenue dans l'unité de capture de CO₂ (2) et **en ce que** ladite unité de régénération est arrêtée ou fonctionne à capacité réduite lors d'un événement de fréquence insuffisante.

8. Procédé selon une des revendications 1 à 7, **caractérisé en ce qu'**une unité d'absorption ou d'adsorption est contenue dans l'unité de capture de CO₂ (2) et **en ce que** ladite unité d'absorption ou d'adsorption est arrêtée ou fonctionne à capacité réduite lors d'un événement de fréquence insuffisante.

9. Procédé selon la revendication 8, **caractérisé en ce que** tout ou partie du gaz de combustion est dérivé autour de l'équipement de capture lors d'un événement de fréquence insuffisante.

10. Procédé selon la revendication 7, **caractérisé en ce que** la consommation de vapeur d'eau (13) de l'unité de régénération contenue dans l'unité de capture de CO₂ (2) est réduite en raison de l'arrêt ou du fonctionnement à capacité réduite, et **en ce que** l'excès de vapeur d'eau est introduit dans une turbine à vapeur existante de la centrale (1) pour une production électrique supplémentaire lors d'un événement de fréquence insuffisante.

11. Procédé selon la revendication 10, **caractérisé en ce que** la régénération est arrêtée ou la régénération de l'absorbant ou adsorbant est placée en capacité réduite lors d'un événement de fréquence insuffisante, et **en ce que** l'absorbant ou adsorbant stocké est utilisé pour la capture du CO₂ lors d'un événement de fréquence insuffisante.

12. Procédé selon une des revendications précédentes, **caractérisé en ce que** le système de capture de CO₂ est contrôlé par un système de commande en boucle fermée (18), qui est intégré dans le système de commande de la centrale ou coordonné par le système de commande de la centrale ou comporte une liaison de données directe (22) avec le système de commande de la centrale.

13. Centrale électrique (1) avec un système de capture de CO₂ comprenant une unité de capture de CO₂ (2) et une unité de compression de CO₂ (9), **caractérisée en ce que** la centrale (1) comprend un système de commande, qui utilise la consommation électrique du système de capture de CO₂ comme paramètre de commande pour contrôler la production électrique nette (D) lors d'un événement de fréquence insuffisante.

14. Centrale électrique selon la revendication 13, **caractérisée en ce qu'**au moins un générateur et les systèmes électriques sont conçus pour convertir l'énergie maximale, qui est produite avec le système de capture de CO₂ arrêté, en énergie électrique et pour transmettre cette énergie électrique au réseau.

15. Centrale électrique (1) selon la revendication 13 ou 14, **caractérisée en ce qu'**une unité d'absorption est contenue dans l'unité de capture de CO₂ (2) et **en ce qu'**une dérivation (12, 11) de l'unité de compression de CO₂ (9) et/ou de l'unité d'absorption est prévue.

16. Centrale électrique (1) selon une des revendications 13 à 15, **caractérisée en ce qu'**une unité d'absorption est contenue dans l'unité de capture de CO₂ (2) et **en ce que** l'unité d'absorption est conçue pour supporter les gaz de combustion (15), même si elle n'est pas en fonctionnement.
